# EUROPEAN PATENT APPLICATION

(11) **EP 4 679 610 A1**
(43) Date of publication of application: **14.01.2026**
(21) Application number: 24843412.8
(22) Date of filing: 10.07.2024
(51) Int. Cl.: H01M 50/521, H01M 50/503, H01M 50/526, H01M 50/533, H01M 50/534, H01M 50/51, H01M 50/211, H01R 11/28, H01R 13/03

(54) **CONNECTOR AND BATTERY MODULE INCLUDING SAME**

(30) Priority: 18.07.2023 KR 20230093446
(71) Applicant: LG Energy Solution Ltd., Seoul 07335 (KR)
(72) Inventor: YOON, Dong Sik, Daejeon 34122 (KR); KIM, Hong Jung, Daejeon 34122 (KR)
(74) Representative: Hoffmann Eitle
(86) International application number: PCT/KR2024/009892
(87) International publication number: WO 2025/018694

(57) **Abstract**

The present invention relates to a connector and a battery module including the connector. The connector electrically connects members within a battery module to each other, the connector including one or more metals, and a dielectric. The dielectric has a dielectric constant (k) with an upper limit of 50 and a lower limit of 2.

## Description

### TECHNICAL FIELD

### CROSS-REFERENCE TO RELATED APPLICATION

The present application claims the benefit of the priority of Korean Patent Application No. 10-2023-0093446, filed on July 18, 2023, which is hereby incorporated by reference in its entirety.

### TECHNICAL FIELD

The present invention relates to a connector, and more particularly to a connector having good safety under overvoltage.

### BACKGROUND ART

In recent years, as the prices of energy sources are rising due to the depletion of fossil fuels, and concern about environmental pollution is increasing, the need for eco-friendly alternative energy sources have become indispensable for future life. Accordingly, research continues on various power generation technologies such as solar power, wind power, and tidal power, and power storage devices such as batteries to make more efficient use of the generated electric energy are also drawing much attention.

Furthermore, as technology development and demand for electronic mobile devices and electric vehicles using batteries increase, the demands for batteries as energy sources are rapidly increasing. Thus, many researches on the batteries which are capable of meeting those various demands are being carried out.

In particular, in terms of materials, there are high demands for lithium secondary batteries, such as lithium ion batteries and lithium ion polymer batteries, having advantages such as the high energy density and discharge voltage and the output stability.

Depending on the shape of a battery case, secondary batteries may be classified into a cylindrical or prismatic type battery, in which the electrode assembly is embedded in a cylindrical or prismatic metal can and a pouch type battery in which the electrode assembly is embedded in a pouch type case made of an aluminum laminate sheet. Here, an operating voltage of such a unit cell is about 2.5 V to 4.2 V.

Therefore, when an output voltage higher than the operating voltage is required, a plurality of individual batteries are connected to constitute a battery module, and a plurality of battery modules are gathered to constitute a battery pack.

In such a battery module, the secondary battery may be electrically connected in parallel and/or in series. Here, the electrical connection of the secondary battery may be provided by bonding the busbar to the lead of the neighboring secondary battery.

On the other hand, when an overvoltage occurs in the secondary battery, there is a risk of ignition or explosion. In particular, in the case of a battery module in which a plurality of secondary batteries are electrically connected, the risk is even greater because the ignition or explosion that occurs in any one secondary battery may be consecutively spread to the neighboring secondary battery.

Accordingly, technologies have been developed to ensure the safety by blocking the current through fuses, etc., in case of overvoltage in the battery module. However, in the case of the related art, there is a problem in that thermal damage may be inflicted on the components around the fuse, and the energy density of the battery module may be reduced.

Therefore, there is a need for technology that may improve safety issues caused by explosions or fires without reducing the energy density of the battery module.

### DISCLOSURE OF THE INVENTION

### TECHNICAL PROBLEM

The present invention has been invented to solve the above-described problems, an object of the present invention is to provide a connector that may function as a safety device by blocking the current in case of overvoltage in the battery module without reducing energy density, and a battery module including the same.

### TECHNICAL SOLUTION

According to an embodiment, the present invention provides a connector that electrically connects components within a battery module, wherein the connector includes at least one metal and a dielectric, and the dielectric has a dielectric constant (k) with an upper limit of 50, preferably 30, more preferably 15, and most preferably 5, and with a lower limit of 2, preferably 3.

Specifically, the connector may be a busbar, which electrically connects a plurality of secondary batteries to each other, and in which at least one through-hole is defined to which an electrode lead tab is inserted.

Alternatively, the connector may be an electrode lead tab, which electrically connects the secondary batteries to the outside or to each other, and which includes an electrode lead and an electrode tab.

The connector has a structure in which a metal layer including the metal and a dielectric layer including the dielectric are sequentially stacked in a thickness direction of the connector.

A ratio of a thickness of the metal layer to a thickness of the dielectric layer may range of 1:10⁻⁶ to 1:10⁻¹, preferably of 1:10⁻⁶ to 1:10⁻², and more preferably of 1:10⁻⁶ to 1:10⁻³.

The connector may have a structure in which a first area including the metal and a second area including the dielectric are connected to each other in a plane direction.

A ratio of a surface area of the first area to the second area in the plane direction may range of 1:1 to 1:10⁻⁶, preferably of 1:10⁻¹ to 1:10⁻⁶, more preferably of 1:10⁻² to 1:10⁻⁶, and further more preferably of 1:10⁻³ to 1:10⁻⁶.

The dielectric may include one or more materials selected from one or more metal oxides selected from the group consisting of SiO₂, Al₂O₃, MgO, CaO, ZrSiO₄, HfSiO₄, Si₃N₄, Y₂O₃, SrO, ZrO₂, Ta₂O₅, HfO₂, La₂O₃, and BaO; and one or more metal silicates selected from the group consisting of Hf, Zr, and Y. Preferably, the dielectric may include one or more materials selected from the group consisting of SiO₂, ZrO₂, HfO₂, Al₂O₃, and Y₂O₃. More preferably, the dielectric may include one or more materials selected from the group consisting of SiO₂, ZrO₂, and HfO₂. Furthermore, even more preferably, the dielectric may include SiO₂.

The dielectric may be contained at 0.01 wt% to 5.00 wt% based on the total weight of the connector, preferably at 0.01 wt% to 3.00 wt%, and more preferably at 0.1 wt% to 1.0 wt%.

The dielectric may have a band gap of 3.5 eV or more, preferably of 4.0 eV or more, more preferably of 5.0 eV or more.

The metal may be contained at 90.00 wt% to 99.99 wt% based on the total weight of the connector, preferably at 95.00 wt% to 99.99 wt%, more preferably at 99.00 wt% to 99.99 wt%.

Meanwhile, according to another embodiment, the present invention provides a battery module including the connector and a cell assembly.

The cell assembly may include a plurality of secondary batteries, and the secondary batteries are connected in series to each other through the connector.

### ADVANTAGEOUS EFFECTS

The connector according to the present invention may include the dielectric having the dielectric constant (k) with the upper limit of 50 and the lower limit of 2. Thus, in the event of the overvoltage in the battery module, the disconnection in the connector that electrically connects the components within the battery module may be induced to improve the safety of the battery module, thereby enhancing the energy density of the battery module. In addition, after the disconnection, the connector may continue to be used as a safety device without needing to be replaced.

### BRIEF DESCRIPTION OF THE DRAWINGS

FIG. 1 is a schematic perspective view illustrating a type of a busbar as a connector.
FIG. 2 is a schematic perspective view illustrating another type of a busbar as a connector.
FIG. 3 is a schematic perspective view illustrating a type of an electrode assembly including an electrode lead tab as a connector.
FIG. 4 is a schematic perspective view of a busbar as a connector according to an embodiment of the present invention.
FIG. 5 is a schematic perspective view of a busbar according to another embodiment of the present invention.
FIG. 6 is a schematic perspective view of a busbar according to further another embodiment of the present invention.
FIG. 7 is a schematic perspective view of an electrode lead tab as a connector according to an embodiment of the present invention.
FIG. 8 is a schematic perspective view of an electrode lead tab as a connector according to another embodiment of the present invention.

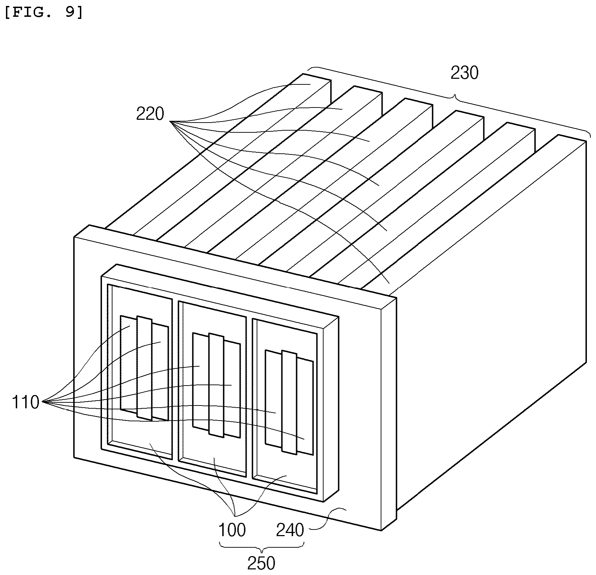

FIG. 9 is a schematic perspective view of a battery module according to an embodiment of the present invention.

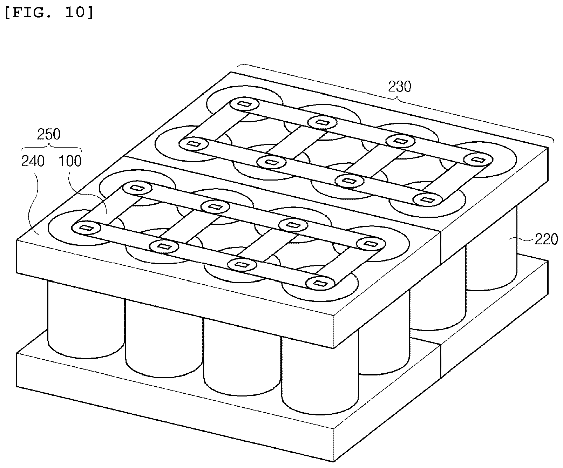

FIG. 10 is a schematic perspective view of a battery module according to another embodiment of the present invention.

### MODE FOR CARRYING OUT THE INVENTION

Hereinafter, the present invention will be described more specifically.

Terms or words used in this specification and claims should not be restrictively interpreted as ordinary meanings or dictionary-based meanings, but should be interpreted as meanings and concepts conforming to the technical spirit of the present invention on the basis of the principle that an inventor can properly define the concept of a term to describe and explain his or her invention in the best ways.

In this specification, the singular forms include the plural forms as well, unless the context clearly indicates otherwise. The meaning of "comprises" and/or "comprising" used in the specification does not exclude the presence or addition of one or more components other than the mentioned component.

In this specification, the dielectric constant (k) refers to the magnitude of the permittivity relative to a vacuum.

The present inventors repeatedly conducted research to ensure the safety of the battery module by inducing disconnection in the event of overvoltage in the battery module. As a result, they discovered that the connector may include a dielectric having a dielectric constant (k) with an upper limit of 50 and a lower limit of 2, thereby ensuring the safety of the battery module and completing the present invention.

### CONNECTOR

The present invention provides a connector, which includes one or more metals and dielectrics, and the dielectric has a dielectric constant (k) with an upper limit of 50 and a lower limit of 2.

This connector may be used to electrically connect components within the battery module. For example, the connector may be a busbar or an electrode lead tab, but it is not limited thereto.

Specifically, as the connector, the busbar may electrically connect a plurality of secondary batteries to each other and transmit an electrical signal from one secondary battery to another. In other words, the busbar may be electrically connected to each electrode lead tab of the plurality of secondary batteries. For example, in a plurality of electrode lead tabs connected to the plurality of secondary batteries, the busbars may be in contact with a plurality of electrode lead tabs having the same polarity or in contact with a plurality of electrode lead tabs having different polarities to electrically connect the plurality of secondary batteries to each other.

The busbar may include at least one through-hole. For example, the busbar may have a plate shape with its length and width being wider than its thickness, and the through-hole may be defined by passing through a central portion of the plate-shaped busbar. Here, the through-hole may be configured to allow the electrode lead tab of the secondary battery to be inserted. The electrode lead protruding outward from an exterior of the secondary battery may be inserted into and coupled to the through-hole of the busbar, thereby electrically connecting the plurality of secondary batteries to each other.

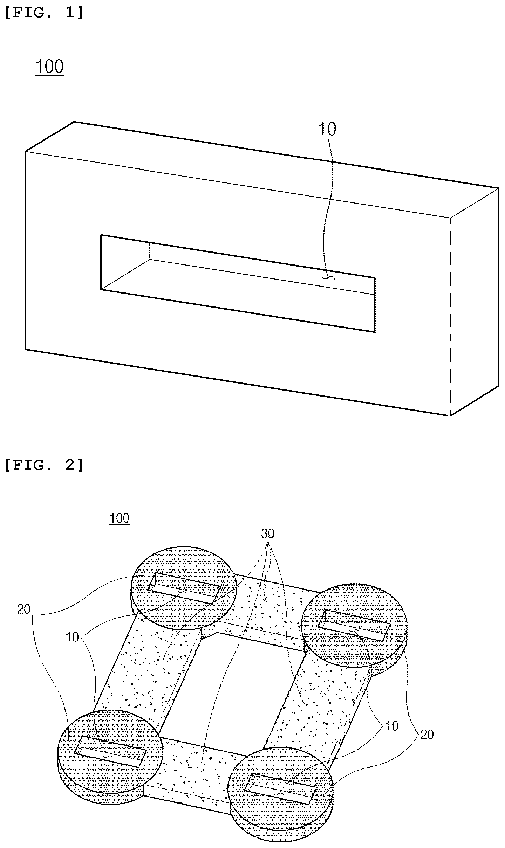

FIG. 1 is a schematic perspective view illustrating a type of a busbar as a connector. A busbar 100 may have a rectangular plate shape in which a through-hole 10 is defined in a central portion thereof. Such a rectangular plate-shaped busbar may be used to electrically connect pouch type secondary batteries to each other, but it is not limited thereto.

FIG. 2 is a schematic perspective view illustrating another type of a busbar as a connector. The busbar may include a plurality of circular plates 20 and an equal number of bar-shaped plates 30 as the circular plates 20. The bar-shaped plates 30 may connect between the circular plates 20. For example, four bar-shaped plates 30 connect the four circular plates 20 to each other. The busbar 100 may have a structure in which the shape is repeated horizontally. Also, the through-hole 10 may be defined in a central portion of each of the circular plates 20. Such a rectangular plate-shaped busbar may be used to electrically connect the pouch type secondary batteries to each other, but it is not limited thereto.

However, the busbar may have various shapes for the electrical connection between secondary batteries and is not limited to a specific shape and size.

Additionally, as the connector, the electrode lead tab may include an electrode lead and an electrode tab, and specifically, the connector may have a shape in which the electrode tab and the electrode lead are connected to each other, which extend from a positive electrode or a negative electrode for a secondary battery.

The electrode lead tab may function as an electrode terminal of a secondary battery, electrically connecting the secondary battery to the external environment or between secondary batteries. Specifically, the electrode lead tab may electrically connect the secondary battery to the external devices, or may allow an end of the electrode lead tab to be in contact with a busbar to electrically connect the secondary batteries to each other.

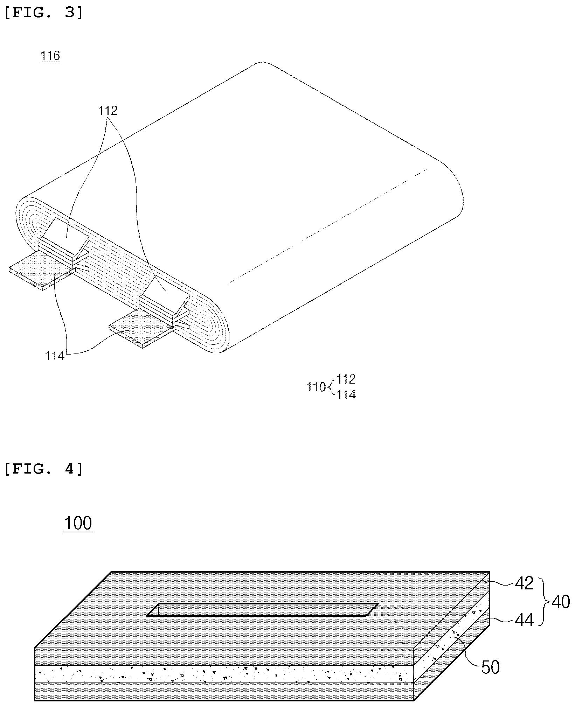

FIG. 3 is a schematic perspective view illustrating a type of an electrode assembly including an electrode lead tab 110 as a connector. Referring to Fig. 3, the electrode lead tab 110 may have a structure in which an electrode tab 112 protruding from an electrode assembly 116 is connected to an electrode lead 114.

Specifically, the electrode assembly for the secondary battery may include a non-coating portion in which an active material layer is not provided, and an electrode tab corresponding to a positive or negative electrode plate may protrude from the non-coating portion in a manner that the electrode tab is attached to an electrode plate. The electrode tab consists of a positive electrode tab and a negative electrode tab, each extending and protruding from the electrode assembly. That is, the positive electrode tab may protrude from the positive electrode plate of the electrode assembly, and the negative electrode may protrude from the negative electrode plate of the electrode assembly.

The electrode tab may be included in one electrode assembly and provided in a plurality of electrode tabs. For example, a plurality of positive electrode tabs may be provided on the positive electrode plate, and a plurality of negative electrode tabs may be provided on the negative electrode plate. In this case, the plurality of positive electrode tabs may be connected to a positive electrode lead, and the plurality of negative electrode tabs may be connected to a negative electrode lead. However, the electrode tabs are not limited thereto, and one electrode tab may be included in one electrode assembly.

In addition, the electrode lead tab may protrude in the same, opposite, or orthogonal direction with respect to the electrode assembly.

In the electrode lead tab, one end of the electrode lead may be attached to the electrode tab, and the other end of the electrode lead may be exposed outside a case of the electrode assembly. The electrode lead may be attached to an upper or lower portion of the electrode tab to constitute the electrode lead tab.

The electrode lead may be attached to the electrode tab through ultrasonic welding, but it is not limited thereto. The electrode tab and the electrode lead may be attached to each other in various ways to constitute the electrode lead tab.

The electrode lead may have a rectangular plate shape, but it is not limited thereto.

Meanwhile, the connector may include metal as a conductive material with high electrical conductivity to electrically connect components within the battery module.

Specifically, the metal may be one or more materials selected from the group consisting of aluminum (Al), nickel (Ni), copper (Cu), gold (Au), and SUS (Stainless Use Steel), preferably one or more selected from the group consisting of aluminum (Al), nickel (Ni), and copper (Cu). For example, the metal may have a structure in which aluminum and copper are stacked in order, or a structure in which copper is plated with nickel.

The metal may be contained at 90.00 wt% to 99.99 wt% based on the total weight of the connector, preferably at 95.00 wt% to 99.99 wt%, and more preferably at 99.00 wt% to 99.99 wt%. When the metal content is within the above range, the connector may secure sufficient conductivity, thereby improving the current-transfer capability when electrically connecting members within the battery module.

The connector may include a dielectric having a dielectric constant (k) with the upper limit of 50 and the lower limit of 2.

Specifically, since the connector may be used to electrically connect members within the battery module, it may be used as a fusing or safety device that may block the current in case of overvoltage within the battery module. Previously, disconnection was induced through Joule heating by adjusting a thickness of the connector made of metal. However, in this case, the thickness of the metal included in the connector had to be increased in order for the connector to withstand high voltage. Accordingly, there was a problem of reduced energy density in the battery module, and when a disconnection occurs due to Joule heating, the connector gets damaged, thus making it impossible to continuously use the disconnected connector as a safety device.

Therefore, when the connector includes a dielectric having the dielectric constant (k) with the upper limit of 50 and the lower limit of 2, the capacitance may be adjusted only by the dielectric constant because the capacitance is proportional to the dielectric constant, which is an inherent property of the dielectric, without significantly increasing the thickness of the dielectric. Here, when overvoltage occurs in the secondary battery and the amount of charge accumulated on an interface of the dielectric included in the connector increases, polarization occurs, and as a result, the current flowing through the dielectric may be blocked. Accordingly, when the voltage is within the normal range and not an overvoltage, the members within the battery module are electrically connected through the connector. However, in the event of an overvoltage, the connector may induce a disconnection to enhance the safety of the battery module. Additionally, even when the connector includes the dielectric, the thickness of the connector does not increase significantly, allowing for an improvement in the energy density of the battery module. Also, when an overvoltage occurs, the connector may induce a disconnection without causing Joule heating, enabling continuous use of the connector without the need for separate replacement after disconnection.

Specifically, the dielectric may have a dielectric constant (k) with an upper limit of 50, preferably 30, more preferably 15, and even more preferably 5, and a lower limit of 2, preferably 3. When the dielectric constant is less than 2, current may not flow between members within the battery module due to the low capacitance, even in the event of a normal voltage operation, not just overvoltage. Thus, the electrical connection of the members within the battery module through the connector may be subject to interference. When the dielectric constant is greater than 50, the dielectric will not block the current even in an overvoltage situation, and thus, the connector may not serve as a safety device that prevents the explosion or ignition of the secondary battery due to overvoltage. Accordingly, when the dielectric constant is within the above range, the connector may enable smooth electrical connection between the members within the battery module under normal voltage conditions. While blocking the electrical connection between the components in the event of overvoltage, thereby ensuring the safety of the secondary battery.

The dielectric may have a band gap of 3.5eV or more, preferably 4.0eV or more, and more preferably 5.0eV or more. When the band gap of the dielectric is within the above range, it is possible to use the connector as a safety device that blocks the current when overvoltage flows, while reducing leakage current that may occur in the connector.

The dielectric may include a material having a high dielectric constant (k) to induce disconnection in the connector when an overvoltage flows. For example, the dielectric may include one or more materials selected from one or more metal oxides selected from the group consisting of SiO₂, Al₂O₃, MgO, CaO, ZrSiO₄, HfSiO₄, Si₃N₄, Y₂O₃, SrO, ZrO₂, Ta₂O₃, HfO₂, La₂O₃, and BaO; and one or more metal silicates selected from the group consisting of Hf, Zr, and Y. Preferably, the dielectric may include one or more materials selected from the group consisting of SiO₂, ZrO₂, HfO₂, Al₂O₃, and Y₂O₃. More preferably, the dielectric may include one or more materials selected from the group consisting of SiO₂, ZrO₂, and HfO₂. Furthermore, even more preferably, the dielectric may include SiO₂.

The dielectric may be contained at 0.01 wt% to 5.00 wt% based on the total weight of the connector, preferably at 0.01 wt% to 3.00 wt%, and more preferably at 0.1 wt% to 1.0 wt%. When the amount of the dielectric is within the above range, it is possible to block the current flowing through the connector during an overvoltage event with a relatively lower amount , thereby ensuring the safety of the battery module and improving the energy density of the battery module compared to the existing connector using dissimilar metals.

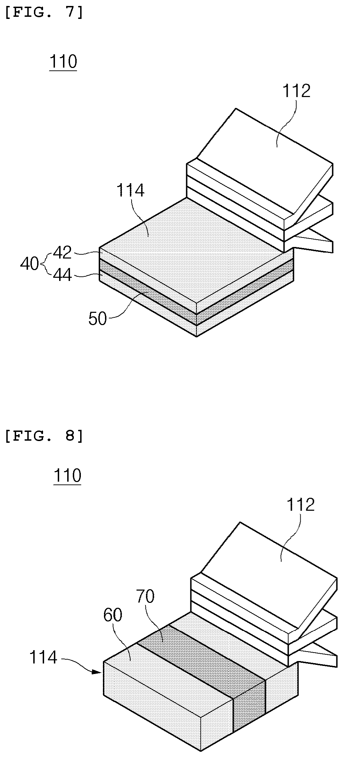

FIGS. 4 and 7 are schematic perspective views illustrating a busbar or an electrode lead tab as a connector according to an embodiment of the present invention. Referring to FIGS. 4 and 7, a busbar 100 or an electrode lead tab 110 as a connector according to an embodiment of the present invention may include a structure in which a metal layer 40 and a dielectric layer 50 including dielectric are sequentially stacked in a thickness direction of the connector.

For example, the busbar 100 and the electrode lead tab 110 may have a structure in which a first metal layer 42, the dielectric layer 50, a second metal layer 44 are sequentially stacked in a thickness direction of the busbar. The first metal layer 42 and the second metal layer 44 may include different types of metals or the same type of metal. However, the stacked structure of the metal layer and the dielectric layer is not limited thereto.

Here, the ratio of a thickness of the metal layer to a thickness of the dielectric layer may ranges of 1:10⁻⁶ to 1:10⁻¹, preferably of 1:10⁻⁶ to 1:10⁻², and more preferably of 1:10⁻⁶ to 1:10⁻³. When the thickness of the dielectric layer is within the above range, as the thickness of the dielectric layer included in the connector decreases, the capacitance increases. Thus, even when the connector includes the dielectric, the connector may be used as a safety device without significantly increasing the thickness thereof, thereby improving the energy density of the battery module.

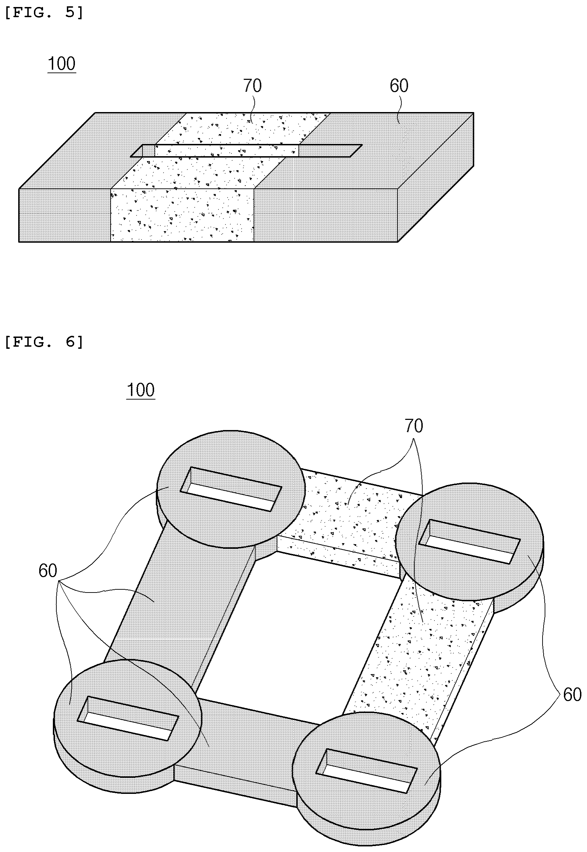

FIGS. 5, 6, and 8 are schematic perspective view of a busbar or an electrode lead tab as a connector according to another embodiment of the present invention. As a connector according to another embodiment of the present invention, a busbar 100 and an electrode lead tab 110 may include a structure in which a first area 60 including the metal and a second area 70 including the dielectric are connected in a plane direction.

For example, referring to FIG. 5, in a rectangular plate-type busbar 100 having a through-hole 10 defined in a central portion thereof, a portion of a wider plane of the plate may be defined as the first area 60, and the other portion may be defined as the second area 70.

Alternatively, referring to FIG. 6, a circular plates of a busbar 100 may be a first area 60, and a part of a bar-shaped plate connecting the circular plates to each other may be a second area 70. Alternatively, a portion of a wider surface of the bar-shaped plate may be a first area 60, and the other portion of the wider surface of the bar-shaped plate may be a second area 70.

Referring to FIG. 8, in a rectangular plate-shaped electrode lead tab 110, a portion of a wider surface of an electrode lead 114 may be a first area 60, and the other portion may be a second area 70.

Here, the ratio of a surface area of the first and the second areas in a plane direction may ranges of 1:1 to 1:10⁻⁶, preferably of 1:10⁻¹ to 1:10⁻⁶, more preferably of 1:10⁻² to 1:10⁻⁶, and further more preferably of 1:10⁻³ to 1:10⁻⁶. When the ratio of the surface area of the first and second areas is within the above range, as a thickness of the first area included in the busbar decreases, the capacitance increases. Thus, even when the busbar includes the dielectric, the busbar may be used as a safety device without significantly increasing the thickness thereof, thereby improving the energy density of the battery module.

Additionally, the connector may simultaneously include a structure in which a metal layer 10 and a dielectric layer 20 including the dielectric are sequentially stacked; and a structure in which a first area 30 including the metal and a second area 40 including the dielectric are connected in the plane direction.

### Battery Module

According to another embodiment, the present invention provides a battery module including the connector and a cell assembly.

The structure of the busbar and the electrode lead tab is the same as described above, so a detailed explanation will be omitted.

Specifically, the battery module may accommodate a plurality of secondary batteries therein to store and output electrical energy. A plurality of secondary batteries may be coupled to each other to constitute the cell assembly. In other words, the cell assembly may refer to an assembly of secondary batteries, which are arranged at a predetermined interval within an accommodating space in the battery module.

The secondary batteries are constituted by electrode assemblies in which electrodes are stacked and electrode lead tabs electrically connected to each electrode assembly. The battery module may allow the secondary batteries to be accommodated therein and be arranged at a predetermined interval so that the electrode lead tabs are uniformly disposed at one side.

The electrode assembly may refer to a combination of electrodes and a separator and be configured in a shape in which one or more positive electrode plates and one or more negative electrode plates are disposed with the separator therebetween.

Also, the positive electrode plate of the electrode assembly is provided with a positive electrode tab, and one or more positive electrode tabs may be connected to a positive electrode lead.

The secondary battery may be a pouch type or cylindrical secondary battery. However, the battery module according to the present invention is not limited to the pouch type or cylindrical secondary battery, and various secondary batteries known at the time of filing of the present invention may be employed.

FIG. 6 is a schematic perspective view of a battery module according to an embodiment of the present invention. Referring to FIG. 6, when the secondary battery is a pouch type secondary battery, a plurality of secondary batteries 220 are horizontally stacked on each other in a vertically standing state to constitute a cell assembly 230. Here, a plurality of electrode lead tabs 110 may be disposed in front of or at a rear of the cell assembly 230. In addition, a plurality of busbars 100 may be disposed in front of or at the rear of the cell assembly 230. Accordingly, the busbar 100 may be coupled to a plurality of electrode lead tabs 110 with the same polarity or a plurality of electrode lead tabs 110 with different polarities to electrically connect a plurality of pouch type secondary batteries to each other.

Also, FIG. 7 is a schematic perspective view of a battery module according to another embodiment of the present invention. Referring to FIG. 7, when the secondary battery is a cylindrical secondary battery, a plurality of secondary batteries 220 may be arranged in multiple rows and columns to constitute a cell assembly 230. The columns may refer to a vertical direction relative to the ground, while the rows may refer to a horizontal direction relative to the ground. Here, a plurality of busbars 100 may be disposed on the plurality of cylindrical secondary batteries 220, for example, between the plurality of secondary batteries adjacent to each other in a row or column direction. The busbar 100 may be coupled to an electrode lead tab 110 protruding from an upper portion of the cylindrical secondary battery to electrically connect the plurality of secondary batteries to each other. Specifically, the busbar 100 may parallelly connect the secondary batteries to each other, which are arranged in the same column, and serially connect the cylindrical secondary batteries to each other, which are arranged in two adjacent columns.

Specifically, the electrode lead tab 110 protruding outward from the exterior of the secondary battery may pass through at least one through-hole 10 defined in the busbar to be connected to the busbar. The busbar 100 and the electrode lead tab 110 may be electrically connected by being fixed in contact through methods such as laser welding or ultrasonic welding.

Accordingly, the busbar and electrode lead tab may electrically connect the secondary batteries in series and/or parallel. Here, since the busbar and the electrode lead tab include the dielectric, in the event of an overvoltage occurring in any one of the plurality of secondary batteries, the electrical connection between the secondary batteries may be blocked to ensure the safety of the battery module.

Also, the cell assembly 230 may include a busbar frame 240, which is a frame structure on which the busbar is mounted. The busbar frame 240 may be provided on an outer surface of the busbar 100. For example, a plurality of busbars 100 may be mounted on a busbar frame 240. In order to apply the plurality of busbars, the busbar frame 240 may include an insulating material such as plastic that may be electrically isolated from the busbar 100.

A busbar assembly 250 may include the busbar 100 and the busbar frame 240.

Hereinafter, the present invention will be described in more detail with reference to specific embodiments.

### Example

### <Busbar Manufacturing>

A busbar was manufactured with a structure in which a first metal layer containing nickel-copper (99% pure C1100 with electroless nickel plating), a dielectric layer containing SiO2, and a second metal layer containing nickel-copper (99% pure C1100 with electroless nickel plating) are sequentially stacked in the thickness direction of the busbar. A ratio of the thicknesses of the metal layer to the dielectric layer in the manufactured busbar was ranges of 1:10⁻⁶.

### <Battery Module Manufacturing>

A cell assembly in which a plurality of pouch type secondary batteries are stacked is manufactured. After inserting the electrode lead of the secondary battery into the through-hole of the manufactured busbar, the electrode lead of the electrode lead tab and the busbar are coupled to each other by welding to manufacture a battery module.

### Comparative Example

Except for the use of nickel-copper (99% pure C1100 with electroless nickel plating) instead of the dielectric, the busbar and battery module were manufactured in the same manner shown as in Example 1.

### Experiment Example 1 - Heat Generation Measurement Experiment

A current of 5×10⁻²A/cm² was applied to the battery module in the above example and the comparative example at room temperature for 60 seconds, and a surface temperature generated on a busbar surface was measured using an infrared camera (FLIR model i-3). An amount of heat generated from the busbar was calculated from the measured surface temperature. The measurement results are shown in Table 1 below.

**[Table 1]**

| | Heat Generation (J) |
|---|---|
| Example | 1.8 |
| Comparative Example | 7 |

Referring to the Table 1 above, it may be seen that the example shows a significantly lower heat generation compared to the comparative example. This allows us to understand that by using a connector including a dielectric according to the present invention, the connector may be disconnected without the risk of melting due to Joule heating even in the event of overcurrent.

### Experimental Example 2 - Disconnection Time Measurement Experiment

In regards to the battery module in the above example and the comparative example, a current of 1C was applied to the battery module at an SoC of over 150%, and the disconnection time was measured when an individual voltage of the battery module reached 4.95V. The measurement results are shown in Table 2 below.

**[Table 2]**

| | Disconnection time (s) |
|---|---|
| Example | 30 |
| Comparative Example | 60 |

Referring to the Table 2 above, it may be seen that in the event of an overvoltage, the example may quickly block the current compared to the comparative example. Through this, when the connector including the dielectric according to the present invention is used, the disconnection time may be reduced without reducing the energy density of the battery module.

### (Description of reference numerals)

- 100:: Busbar
- 110:: Electrode lead tab
- 112:: Electrode tab
- 114:: Electrode lead
- 116:: Electrode assembly
- 10:: Through-hole
- 20:: Circular plate
- 30:: Bar plate
- 40:: Metal layer
- 42:: First metal layer
- 44:: Second metal layer
- 50:: Dielectric layer
- 60:: First area

- 70:: Second area
- 200:: Battery module
- 220:: Secondary battery
- 230:: Cell assembly
- 240:: Busbar frame
- 250:: Busbar assembly

## Claims

1. A connector for electrically connecting members within a battery module to each other, the connector comprising:
one or more metals; and
a dielectric,
wherein the dielectric has a dielectric constant (k) with an upper limit of 50 and a lower limit of 2.

2. The connector of claim 1, wherein the connector is a busbar, which electrically connects a plurality of secondary batteries to each other, and in which at least one through-hole is defined to which an electrode lead tab is inserted.

3. The connector of claim 1, wherein the connector is an electrode lead tab, which electrically connects the secondary batteries to the outside or to each other, and which comprises an electrode lead and an electrode tab.

4. The connector of claim 1, wherein the connector has a structure in which a metal layer comprising the metal and a dielectric layer comprising the dielectric are sequentially stacked in a thickness direction of the connector.

5. The connector of claim 4, wherein a ratio of a thickness of the metal layer to a thickness of the dielectric layer ranges of 1:10⁻⁶ to 1:10⁻¹.

6. The connector of claim 1, wherein the connector has a structure in which a first area comprising the metal and a second area comprising the dielectric are connected to each other in a plane direction.

7. The connector of claim 6, wherein a ratio of a surface area of the first area to the second area in the plane direction ranges of 1:1 to 1:10⁻⁶.

8. The connector of claim 1, wherein the dielectric comprises one or more materials selected from one or more metal oxides selected from the group consisting of SiO₂, Al₂O₃, MgO, CaO, ZrSiO₄, HfSiO₄, Si₃N₄, Y₂O₃, SrO, ZrO₂, Ta₂O₅, HfO₂, La₂O₃, and BaO; and one or more metal silicates selected from the group consisting of Hf, Zr, and Y.

9. The connector of claim 1, wherein the dielectric is contained at 0.01 wt% to 5.00 wt% based on the total weight of the connector.

10. The connector of claim 1, wherein the dielectric has a band gap of 3.5 eV or more.

11. The connector of claim 1, wherein the metal is contained at 90.00 wt% to 99.99 wt% based on the total weight of the connector.

12. A battery module comprising the connector of any one of claims 1 to 11 and a cell assembly.

13. The battery module of claim 12, wherein the cell assembly comprises a plurality of secondary batteries, and the secondary batteries are connected in series to each other through the connector.
